# EUROPÄISCHE PATENTSCHRIFT

(11) **EP 2 346 148 B1**
(45) Veröffentlichungstag und Bekanntmachung des Hinweises auf die Patenterteilung: **09.05.2012**
(21) Anmeldenummer: 10150872.9
(22) Anmeldetag: 15.01.2010
(51) Int. Cl.: H02K 41/03, H02K 11/00

(54) **Linear-Antrieb**
Linear drive
Entraînement linéaire

(43) Veröffentlichungstag der Anmeldung: 20.07.2011
(73) Patentinhaber: Maxon Motor AG, 6072 Sachseln (CH)
(72) Erfinder: Boletis, Alexis, 6005 Luzern (CH); Fritschy, Hugo, 6072 Sachseln (CH); Hofstetter, Remo, 6005 Luzern (CH); Schulze, Jens Oliver, 6074 Giswil (CH); Pittini, Raniero, 6052 Hergiswil (CH); Ramon, David, 6372 Ennetmoos (CH); Busse-Grawitz, Max Erick, 6055 Alpnach Dorf (CH)
(74) Vertreter: Grünecker, Kinkeldey, Stockmair & Schwanhäusser

(56) Entgegenhaltungen:
- JP-A- 2004 336 842
- US-A- 5 990 583

## Beschreibung

Die Erfindung betrifft einen elektrischen Linearantrieb, insbesondere für einen Dreh- Hub-Motor, nach dem Oberbegriff der unabhängigen Ansprüche 1, 3 und 4.

Ein derartiger Linearantrieb umfasst ein Wicklungssystem mit mehreren gewickelten Spulen, die koaxial zueinander und in axialer Richtung aufeinanderfolgend angeordnet sind, und ein in axialer Richtung relativ zum Wicklungssystem bewegliches Magnetsystem mit mehreren axial aufeinanderfolgenden Permanentmagneten. Das Wicklungssystem wird üblicherweise von einem geregelten Umrichter gespeist. Die Spulen des Wicklungssystems und die Permanentmagnete des Magnetsystems definieren zwischen sich einen Luftspalt. Ferner ist zur Erfassung der Relativbewegung von Wicklungssystem und Magnetsystem bzw. zur Erfassung der relativen Position dieser beiden Systeme ein Sensor vorgesehen, durch welchen ein auf dem Außenumfang des Magnetsystems aufgebrachtes Taktlineal abgetastet wird.

Die US 5990583 A sowie die JP 2004336842 A offenbaren jeweils den Gegenstand der gleichlautenden Oberbegriffe der unabhängigen Ansprüche 1, 3 und 4.

Aus US 5952744 ist eine kombinierte Dreh- und Linearstelleinheit bekannt. Das hohlzylindrische Gehäuse der Stelleinheit nimmt in seinem Innenraum den Läufer auf, welcher aus axial aneinandergereihten und unterschiedlich magnetisierten Permanentmagnetringen besteht. Der Läufer ist somit seinerseits eine hohlzylindrische Hülse, die über ein Luftpolster sowohl drehbar als auch axial verschiebbar gegenüber dem Gehäuse gelagert ist. Gehäuseseitig ist der Läufer von verschiedenartig gewickelten Spulen umgeben. In axialer Richtung der Stelleinheit länglich gewickelte Spulen werden dabei zur Erzeugung eines Drehmoments mit Strom beaufschlagt, wohingegen mehrere in axialer Richtung hintereinander angeordnete Spulen mit einer geringen Ausdehnung in axialer Richtung zur Erzeugung der Antriebskraft in axialer Richtung dienen. Zwischen den gehäuseseitigen Spulen und den Permanentmagneten des Läufers besteht ein geringer Luftspalt. Das Gehäuse ist an einem Ende geschlossen, sodass der Läufer nur in einer Richtung aus dem Gehäuse ausgefahren werden kann. Die gehäuseseitigen Spulen sind nur am offenen Ende des Gehäuses angeordnet, sodass innerhalb des Gehäuses zwischen den Spulen und dem geschlossenen Ende des Gehäuses ein Freiraum zwischen Läufer und Gehäusewand besteht, der deutlich größer ist als der Luftspalt zwischen Läufer und Spulen. In diesem Freiraum sind Sensoren angeordnet, die zur Positionsbestimmung des Läufers vorgesehen sind. Die Positionsbestimmung erfolgt über die Abtastung eines Strichmusters einer auf dem Läufer aufgebrachten Hülse.

Der Nachteil der aus dem Stand der Technik bekannten Linearantriebe ist, dass die magnetische Wechselwirkung zwischen Wicklungssystem und Magnetsystem durch das im Luftspalt befindliche Taktlineal beeinträchtigt ist, und somit der Wirkungsgrad des Linearantriebs gegenüber Linearantrieben ohne Taktlineal erheblich schlechter ist. Es sind zwar auch Linearantriebe bekannt, bei welchen die Position des Läufers nicht am Läufer selbst, sondern an einer im Inneren des hohlzylindrischen Läufers angeordneten Welle abgelesen wird. Ein Stellantrieb mit einer derartigen Positionserfassung ist aus JP 2004040894A bekannt. Diese Art der Positionserfassung erfordert jedoch eine aufwändige Halterung des Sensors, wodurch ein sehr großer Bauraum erforderlich ist. Zudem ist diese Art der Positionserfassung weitaus ungenauer als die direkte Abtastung der Läuferposition am Läufer selbst. Es ist daher die Aufgabe der vorliegenden Erfindung, einen elektrischen Linearantrieb der eingangs genannten Art bereitzustellen, der eine kompakte Bauweise aufweist und eine genaue Positionserfassung mittels eines Sensors zulässt, wobei der Wirkungsgrad des Linearantriebs möglichst wenig durch Sensor und Taktlineal beeinträchtigt sein soll.

Gemäß der vorliegenden Erfindung wird die Aufgabe durch die Merkmale jedes der Ansprüche 1, 3 und 4 gelöst. Demnach liegt dann eine erfindungsgemäße Lösung der Aufgabe vor, wenn das Magnetsystem radial im Inneren des Wicklungssystems angeordnet ist, und sich das Taktlineal in Umfangsrichtung nur auf einem Teil des Umfangs des Magnetsystems erstreckt. Dadurch wird die magnetische Wechselwirkung zwischen Wicklungssystem und Magnetsystem in dem Bereich, der nicht durch das Taktlineal bedeckt ist, nicht negativ durch das Taktlineal beeinflusst. Es ist zudem möglich, den Luftspalt zwischen Magnetsystem und Wicklungssystem in diesem Bereich äußerst gering zu halten, um den Wirkungsgrad hierdurch nochmals zu steigern.

Erfindungsgemäß weisen die Spulen des Wicklungssystems eine radiale Ausbuchtung für das Taktlineal auf. Dadurch kann der Luftspalt zwischen den Spulen des Wicklungssystems und den Permanentmagneten des Magnetsystems über den Großteil des Umfangs äußerst gering gehalten werden, wobei die radiale Ausbuchtung Platz für das Taktlineal lässt. Hierdurch wird ein hoher Wirkungsgrad des Linearantriebs erreicht.

Als besonders vorteilig hat es sich erwiesen, wenn der die innere Begrenzung des Luftspalts bildende Außenumfang des Magnetsystems zylindrisch ist, und die Spulen des Wicklungssystems in Form eines geschlossenen Hufeisens mit einem kreisrunden Abschnitt und einem trapezförmigen Abschnitt gewickelt sind, wobei das Taktlineal innerhalb des trapezförmigen Abschnitts des Hufeisens liegt. Der trapezförmige Abschnitt bildet somit die erwähnte radiale Ausbuchtung der Spulen des Wicklungssystems.

Alternativ dazu ist das Magnetsystem erfindungsgemäß exzentrisch zum Wicklungssystem angeordnet, wodurch auf einer Seite Platz für das Taktlineal geschaffen wird, und auf der gegenüberliegenden Seite ein äußerst geringer Luftspalt ermöglicht wird.

Wiederum alternativ dazu weist das Magnetsystem erfindungsgemäß eine radiale Einbuchtung in Form einer Abflachung für das Taktlineal auf. Auch in diesem Fall kann der Luftspalt zwischen Wicklungssystem und Magnetsystem über große Teile des Umfangs äußerst gering gehalten werden, wobei durch die Einbuchtung des Magnetsystems Platz für das Taktlineal geschaffen wird. Eine Einbuchtung des Magnetsystems kann beispielsweise eine Nut sein.

Vorteilhafte Ausgestaltungen der vorliegenden Erfindung sind Gegenstand der Unteransprüche.

Eine äußerst genaue Abtastung wird mittels eines optischen Sensors erreicht. Alternativ eignen sich auch kapazitive oder induktive Sensoren für eine genaue Abtastung entsprechender Taktlineale.

In einer bevorzugten Ausführungsform ist der Sensor im Wicklungssystem am Luftspalt angeordnet, wobei in axialer Richtung des Wicklungssystems zu beiden Seiten des Sensors jeweils zumindest eine Spule des Wicklungssystems angeordnet ist. So ist der Sensor optimal vor Verschmutzung oder äußeren Einwirkungen geschützt. Vorzugsweise ist der Sensor in axialer Richtung in der Mitte des Wicklungssystems angeordnet. Durch die Anordnung des Sensors direkt am Luftspalt ist eine sehr genaue Positionserfassung möglich.

Vorteilhafter Weise erstreckt sich das Taktlineal in Umfangsrichtung des Magnetsystems auf weniger als 20 Prozent des Umfangs des Magnetsystems. Dadurch wird die magnetische Wechselwirkung zwischen dem Wicklungssystem und dem Magnetsystem auf einem sehr großen Teil des Umfangs nicht durch das im Luftspalt befindliche Taktlineal beeinträchtigt. Die Antriebsleistung des Linearantriebs bzw. dessen Schubkraft kann dadurch erhöht werden.

In einer weiteren bevorzugten Ausführungsform weist ein zur Aufnahme des Sensors in das Wicklungssystem integrierter Sensorträger eine axial verlaufende Nut zur Führung des Taktlineals auf. Hierdurch kann eine unerwünschte Verdrehung des Magnetsystems gegenüber dem Wicklungssystem erreicht werden. Durch den in das Wicklungssystem integrierten Sensorträger wird zudem eine äußerst genaue Positionierung des Sensors sowie ein optimierter Schutz des Sensors vor diversen äußeren Einwirkungen, insbesondere Verschmutzung, erreicht. Alternativ kann das Magnetsystem durch einen oder mehrere Schiebezapfen verdrehsicher in Relation zum Wicklungssystem geführt werden.

In einer weiteren bevorzugten Ausführungsform ist das Magnetsystem drehbar auf einer Welle mittels Kugellager oder Duplexlager gelagert. Dies ermöglicht eine Drehung der in axialer Richtung mit dem Magnetsystem mitbewegten Welle bei gleichzeitig drehfest zum Wicklungssystem gehaltenem Magnetsystem. Wenn die Welle in Rotation versetzt wird, ist somit das Trägheitsmoment geringer als bei einem mitrotierenden Magnetsystem.

Vorzugsweise ist der elektrische Linearantrieb in Kombination mit einem Drehmotor mit integrierter Linearführung vorgesehen.

In einer weiteren bevorzugten Ausführungsform der vorliegenden Erfindung ist an beiden axialen Enden des elektrischen Linearantriebs jeweils zumindest eine Öffnung vorgesehen, die mit einem Staubfilter versehen ist. Dadurch kann ein Luftaustausch zum Druckausgleich nach außen gezielt so gerichtet werden, dass die übrigen Durchlässe in verschiedenen Lagern, Führungen sowie diversen Kabeldurchführungen kaum durchströmt werden, und die ausgetauschte Luft staubarm ist.

Das Wicklungssystem kann thermisch mit einem Gehäuse verbunden sein, wobei das Wicklungssystem vom Gehäuse eingeschlossen ist, und wobei das Gehäuse aus einem Material mit hoher Wärmeleitfähigkeit besteht, und wobei das Gehäuse ferner mit einem Kühlkörper mit Kühlrippen und/oder inneren Kühlkanälen und/oder äußeren Kühlkanälen verbunden ist. Dadurch kann die beim Betrieb des Linearantriebs entstehende Wärme optimal nach Außen abgeleitet bzw. abgeführt werden. Hierdurch kann die Leistungsfähigkeit des elektrischen Linearantriebs deutlich verbessert werden.

Das Wicklungssystem kann auch aus mehreren Teilsystemen aufgebaut sein, welche separat durch mehrere Umrichter gespeist werden können.

Vorteilhafte Ausführungsbeispiele der vorliegenden Erfindung werden im Folgenden anhand von Zeichnungen näher erläutert.

Es zeigen:
- Fig. 1: einen Längsschnitt durch einen ersten Linearantrieb,
- Fig. 2: einen Längsschnitt durch einen zweiten Linearantrieb,
- Fig. 3: einen Längsschnitt durch einen dritten Linearantrieb,
- Fig. 4: einen Längsschnitt durch einen erfindungsgemäßen Linearantrieb in einem ersten Ausführungsbeispiel,
- Fig. 5: einen Querschnitt des erfindungsgemäßen Linearantriebs aus Fig. 4 entlang der in Fig. 4 dargestellten Schnittlinien VI-VI,
- Fig. 6: eine Querschnittsdarstellung des in Fig. 4 dargestellten Linearantriebs entlang der in Fig. 4 markierten Schnittlinien VII-VII,
- Fig. 7: einen Längsschnitt durch den erfindungsgemäßen Linearantrieb aus Fig. 4 in leicht abgewandelter Form,
- Fig. 8: einen Längsschnitt durch einen Dreh-Hub-Motor mit einem integrierten Linearantrieb gemäß Fig. 7,
- Fig. 9a: einen schematischen Querschnitt durch einen weiteren Linearantrieb,
- Fig. 9b: einen schematischen Querschnitt durch einen weiteren erfindungsgemäßen Linear- antrieb, und
- Fig. 9c: einen schematischen Querschnitt durch einen weiteren erfindungsgemäßen Linear- antrieb,

Im Folgenden werden durch gleiche Bezugszeichen gleiche Teile bezeichnet.

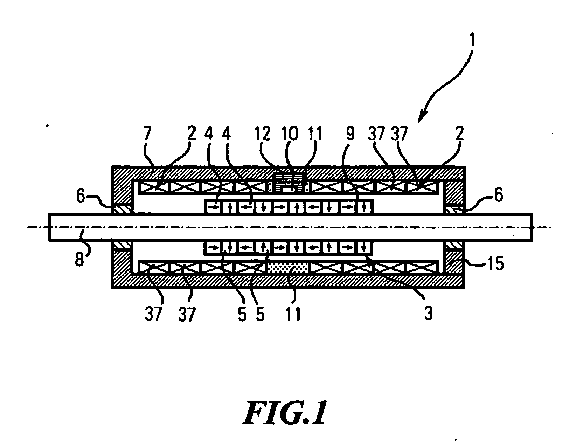

Die Fig. 1 zeigt einen ersten Linearantrieb 1. Das hohlzylindrische Wicklungssystem 2 des Linearantriebs 1 ist drehfest und koaxial mit einem ebenfalls hohlzylindrischen Gehäuse 7 verbunden. Das Wicklungssystem 2 besteht aus mehreren Spulen 37, die koaxial zueinander und in axialer Richtung aufeinanderfolgend angeordnet sind. Das Gehäuse 7 des Linearantriebs 1 ist auf der linken Seite geschlossen ausgeführt und auf der rechten Seite durch einen Gehäusedeckel 15 verschlossen. Die konzentrisch zum Gehäuse 7 angeordnete Welle 8 des Linearantriebs 1 ist über zwei Gleitlager oder Kugelbuchsen 6 der linken geschlossenen Gehäuseseite bzw. des Gehäusedeckels 15 sowohl drehbar als auch axial verschiebbar im Gehäuse 7 gelagert. Die Welle 8 des Linearantriebs 1 ist in einem mittleren Teilbereich von einem hohlzylindrischen Magnetsystem 3 umschlossen, welches drehfest mit der Welle 8 verbunden ist. Die axiale Länge des Magnetsystems 3 ist dabei deutlich geringer als die axiale Länge des Wicklungssystems 2 bzw. des Gehäuses 7, so dass sich die Welle 8 mit dem Magnetsystem 3 in axialer Richtung hin und her bewegen lässt. Das Magnetsystem 3 besteht aus ringförmigen und jeweils abwechselnd nacheinander angeordneten axial magnetisierten Permanentmagneten 4 und radial magnetisierten Permanentmagneten 5. Die eingezeichneten kleinen Pfeile der axial magnetisierten Permanentmagnete 4 bzw. radial magnetisierten Permanentmagnete 5 geben dabei die Magnetisierungsrichtung und damit die Flussrichtung des magnetischen Feldes an. Durch die abwechselnde Anordnung der axial magnetisierten bzw. radial magnetisierten Magnetringe wird eine sogenannte Halbach-Anordnung angenähert. Die wiederkehrende Abfolge besteht nacheinander jeweils aus einem axial von links nach rechts magnetisierten, einem radial nach außen magnetisierten, einem axial von rechts nach links magnetisierten und einem in radialer Richtung nach innen magnetisierten Ring. Eine in axialer Richtung wirkende Kraft zum Antrieb des Linearantriebs 1 wird durch eine alternierende Strombeaufschlagung der verschiedenen Spulen des Wicklungssystems 2 und somit durch die durch den Stromfluss entstehenden und auf die Permanentmagnete des Magnetsystems 3 einwirkenden Magnetfelder der Wicklungssystemspulen erzeugt. Je geringer der Luftspalt 9 zwischen dem Magnetsystem 3 und dem umgebenden Wicklungssystem 2 ist, desto besser kann die magnetische Wechselwirkung zwischen den von den Spulen des Wicklungssystems 2 erzeugten Magnetfeldern und den Permanentmagneten des Magnetsystems 3 in Vortriebskraft umgesetzt werden. Axial gesehen mittig im Wicklungssystem 2 ist am Luftspalt 9 ein Sensor 10 zur Positionserfassung des Magnetsystems 3 bzw. der mit dem Magnetsystem 3 verbundenen Welle 8 angeordnet. Der Sensor 10 kann beispielsweise optisch, kapazitiv, induktiv oder magnetisch ausgeführt sein und sitzt auf einer Platine 12 zur Auswertung bzw. Weiterleitung der Sensorsignale. Sensor 10 und Platine 12 haben in Umfangsrichtung des Wicklungssystems 2 eine geringe Ausdehnung und werden von einem im Wesentlichen ringförmigen Sensorträger 11, der fest entweder mit dem Wicklungssystem 2 oder dem Gehäuse 7 verbunden ist, in Position gehalten.

Die in Fig. 1 gezeigte Lagerung der Welle 8 durch zwei Gleitlager 6 ist günstig in der Herstellung aber spielbehaftet.

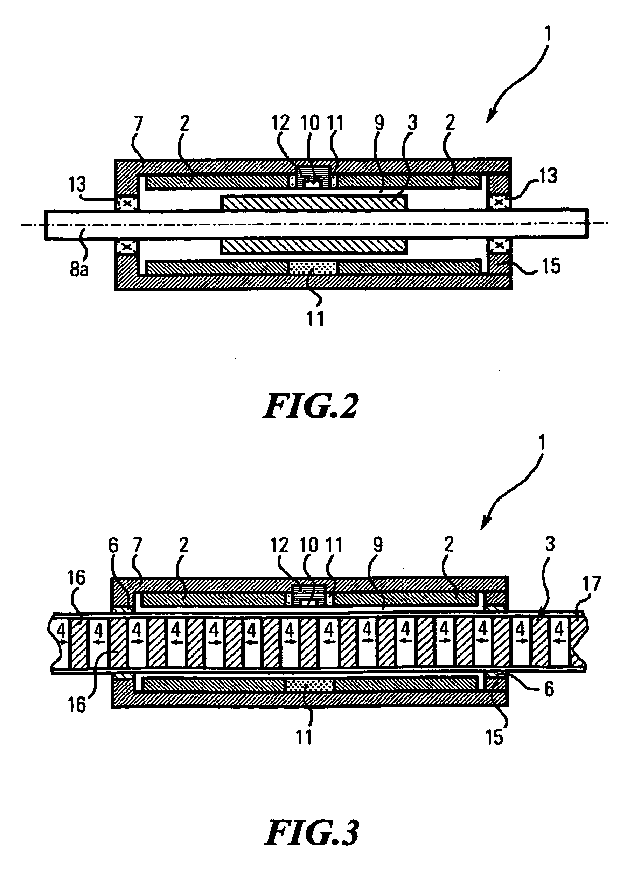

Die Fig. 2 zeigt eine spielfreie Möglichkeit der Linearführung. Der dargestellte Linearantrieb 1 entspricht in seinem Aufbau im Wesentlichen dem des in Fig. 1 gezeigten Linearantriebs. In Fig. 2 sowie allen folgenden Figuren sind die Spulen des Wicklungssystems 2 zwar nicht dargestellt, die Anordnung der Spulen ist dennoch in allen Figuren analog zu Fig. 1 zu betrachten. Die Welle des in Fig. 2 gezeigten Linearantriebs 1 ist jedoch als Kugelkeilwelle 8a ausgeführt. Die Linearführung wird über zwei Kugelkeilwellenführungen 13 spielfrei ermöglicht. Die Welle 8a des in Fig. 2 gezeigten Linearantriebs 1 ist daher nicht drehbar, sondern lediglich axial verschiebbar im Gehäuse 7 des Linearantriebs 1 gelagert. Diese Art von Linearantrieb kann als reiner Linearantrieb eingesetzt werden. Falls der Linearantrieb 1 aus Fig. 3 in einem Dreh-Hub-Motor eingesetzt werden soll, so wird die axial verschiebbare Welle 8a des Linearantriebs 1 mit dem Stator eines Drehmotors verbunden. Da in diesem Fall die gesamte Masse des Drehmotors vom Linearantrieb 1 in axialer Richtung hin und her bewegt werden muss, eignet sich diese Kombination beim Einsatz kleiner und somit leichter Drehmotoren.

Der in Fig. 3 gezeigte Linearantrieb 1 zeigt einen ähnlichen Aufbau wie der Linearantrieb aus Fig. 1. Im Unterschied zu Fig. 1 wird die Welle des Linearantriebs 1 vom Magnetsystem 3 selbst gebildet. Das Magnetsystem 3 besteht aus axial nacheinander angeordneten, jeweils abwechselnd aus einer axial magnetisierten Permanentmagnetscheibe und einer darauf folgenden weichmagnetischen Scheibe 16 als Flusssammler. Die Magnetisierungsrichtung zweier aufeinander folgenden axial magnetisierten Permanentmagnetscheiben 4 ist jeweils entgegengesetzt ausgerichtet und ist in Fig. 3 durch die eingezeichneten kleinen Pfeile verdeutlicht. Das insgesamt zylindrische Magnetsystem 3 ist von einer dünnen Hülse bzw. Beschichtung 17 umgeben, die als Taktlineal für den Sensor 10 dient.

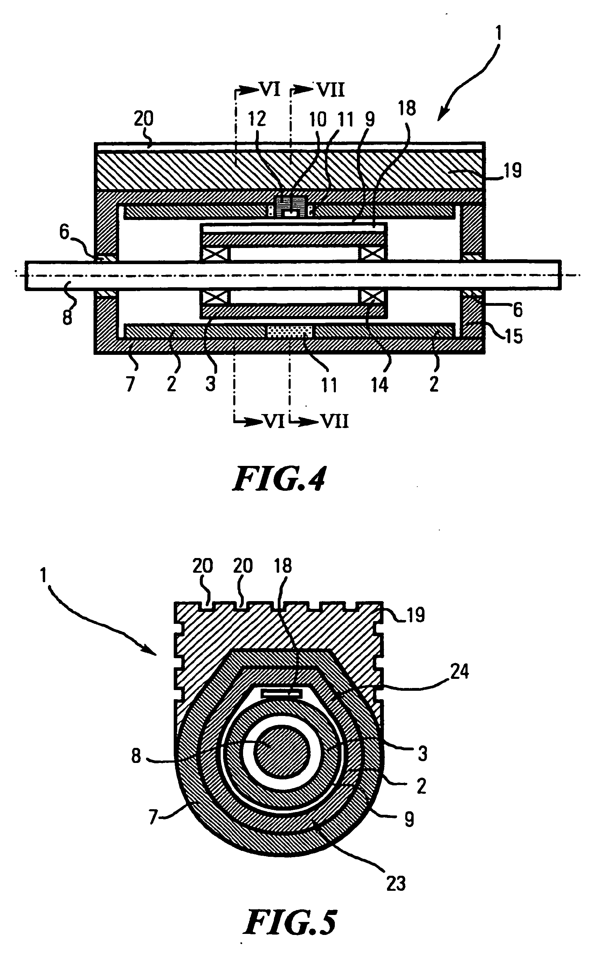

In den Fig. 4 bis 6 ist ein Ausführungsbeispiel eines erfindungsgemäßen Linearantriebs 1 dargestellt, welches in wesentlichen Teilen seines Aufbaus dem in Fig. 1 gezeigten Linearantrieb entspricht. Auch hier ist die Welle 8 des Linearantriebs sowohl axial verschiebbare als auch drehbar über die Gleitlager bzw. Kugelbuchsen 6 am Gehäuse 7 bzw. Gehäusedeckel 15 gelagert. Das Magnetsystem 3 ist über zwei Kugellager 14 drehbar um die Welle 8 herum gelagert, so dass das Magnetsystem 3 nicht mit der Welle 8 mitdreht. Dadurch wird ermöglicht, eine Drehung der Welle durch einen Drehmotor zuzulassen, ohne dass das Magnetsystem am gesamten Umfang mit einem Taktlineal für den Sensor ausgestattet werden muss. Daneben verringert sich hierdurch das Rotationsträgheitsmoment. Das Magnetsystem 3 wird über geeignete Verdrehsicherungen drehfest zum Gehäuse 7 gehalten. An der Umfangsposition, auf welcher gehäuseseitig der Sensor 10 im Sensorträger 11 angeordnet ist, ist auf dem Magnetsystem 3 ein längliches Taktlineal 18 angebracht. Durch das Taktlineal 18 wird eine möglichst genaue Positionserfassung durch den Sensor 10 ermöglicht. Eine äußerst genaue Positionserfassung wird dabei mit Hilfe eines optischen Sensors erreicht, wenn das Taktlineal ein fein auflösendes Linearmuster mit quer zur Achsrichtung verlaufenden Linien aufweist.

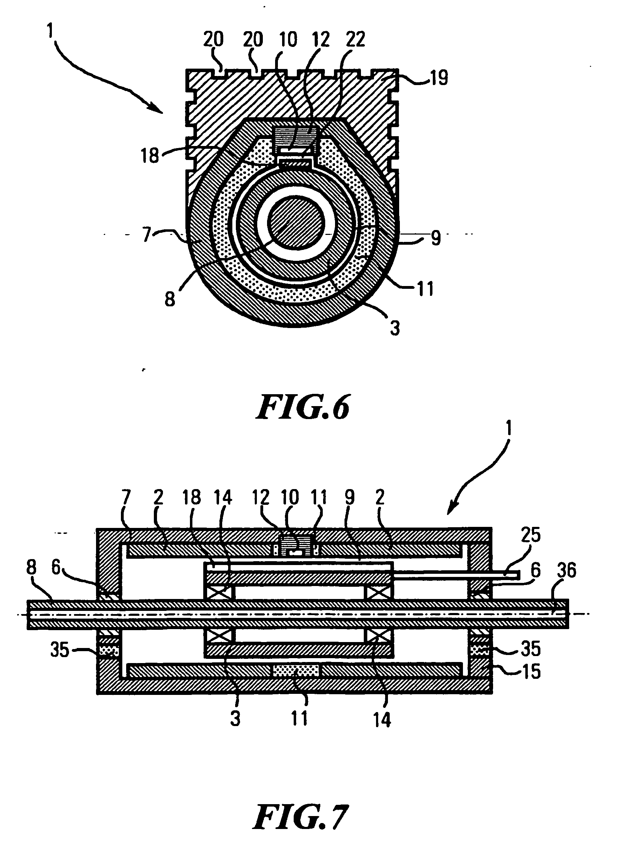

Wie in Fig. 5 dargestellt ist, umschließt das Wicklungssystem 2 das innen liegende Magnetsystem 3 mit einem unteren kreisrunden Abschnitt 23 sehr eng, so dass der Luftspalt 9 zwischen Wicklungssystem 2 und Magnetsystem 3 über einen großen Abschnitt in Umfangsrichtung möglichst gering bleibt. Durch einen trapezförmigen Abschnitt 24 der hufeisenförmig gewickelten Spulen des Wicklungssystems 2 entsteht eine Ausbuchtung im Wicklungssystem 2, die den erforderlichen Platz für das Taktlineal 18 schafft. In Fig. 6 ist zu erkennen, dass das Magnetsystem 3 mit dem Taktlineal 18 drehfest zum Gehäuse 7 und axial verschiebbar geführt wird. Die Führung erfolgt über eine axial verlaufende Nut 22 des Sensorträgers 11, mit Hilfe derer das Magnetsystem 3 über das in der Nut 22 verlaufende Taktlineal 18 an einer Drehung gehindert wird.

Auf das Gehäuse 7 des in den Fig. 4 bis 6 dargestellten Ausführungsbeispiels eines erfindungsgemäßen Linearantriebs 1 ist ein Kühlkörper 19 aufgesetzt, der sich über die gesamte Länge des Gehäuses 7 des Linearantriebs 1 erstreckt. Das Gehäuse 7 ist thermisch mit dem Kühlkörper 19 verbunden. Der Kühlkörper 19 weist zur Wärmeabfuhr axial verlaufende Kühlrippen (20) auf. Anstatt Kühlrippen kann der Kühlkörper auch nicht dargestellte axial verlaufende äußere und/oder innere Kühlkanäle aufweisen, durch die zur Wärmeabfuhr ein Kühlfluid zirkuliert wird. Es ist grundsätzlich möglich, jedes der gezeigten Ausführungsbeispiele mit einem derartigen Kühlkörper 19 zu versehen.

Fig. 7 zeigt eine leichte Abwandlung des in den Fig. 4 bis 6 gezeigten Ausführungsbeispiels eines erfindungsgemäßen Linearantriebs 1. Mit dem Magnetsystem 3 ist hier ein parallel zur Welle 8 verlaufender länglicher Schiebezapfen 25 verbunden. Der Schiebezapfen 25 wird in einer entsprechenden Bohrung des Gehäusedeckels 15 geführt. Er dient der Verdrehsicherung des Magnetsystem 3 gegenüber dem Gehäuse 7 und kann entweder alternativ oder zusätzlich zu der in Fig. 6 gezeigten Lösung mit dem in einer axialen Nut 22 des Sensorträgers 11 verlaufenden Taktlineal 18 vorgesehen werden. Die alleinige Führung über den Schiebezapfen 25 vermeidet die Gefahr eines Abriebs des Taktlineals bzw. des Sensorträgers 11 und somit eine Verschmutzung des Sensors 10. Die Welle 8 des Linearantriebs 1 weist eine durchgehende Bohrung 36 auf, so dass ein Vakuumanschluss zur einfachen Aufnahme von Werkstücken durch die Welle 8 geführt werden kann. Axial an beiden Enden des Linearantriebs (1) befindet sich jeweils eine Öffnung mit einem Staubfilter (35). Dadurch wird ein Luftaustausch zum Druckausgleich nach außen gezielt so gerichtet, dass die übrigen Durchlässe in den Lagern, den Führungen sowie in diversen Kabeldurchführungen kaum durchströmt werden und die ausgetauschte Luft staubarm ist.

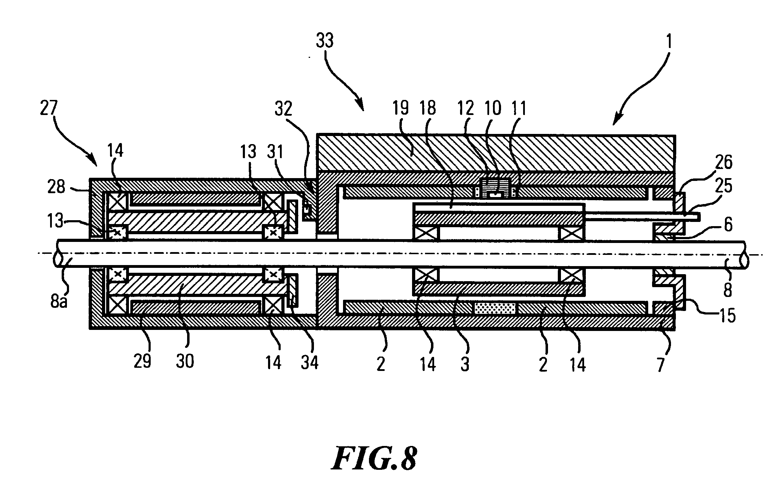

Die Fig. 8 schließlich zeigt den in Fig. 7 dargestellten Linearantrieb 1 in einem kombinierten Dreh-Hub-Motor 33. An dem Linearantrieb 1 ist von links ein Drehmotor 27 angeflanscht. Die Welle 8 des Linearantriebs ist nach links verlängert und bildet somit gleichzeitig die Welle des Drehmotors 27. Im Bereich des Drehmotors 27 ist die Welle 8 als Kugelkeilwelle 8a ausgeführt. Der Drehmotor 27 besteht aus einem Gehäuse 28, einer vom Gehäuse 28 umschlossenen hohlzylindrischen Wicklung 29 und einem drehfest mit der Welle verbundenen Magnetträger 30 mit mehreren Permanentmagneten. Die drehfeste Lagerung des Magnetträgers 30 erfolgt über zwei Kugelkeilwellenführungen 13. Gegenüber dem Gehäuse ist der Magnetträger 30 mittels Kugellager 14 drehbar gelagert. Die Welle 8 bzw. 8a ist demnach über die Kugelkeilwellenführungen 13 gegenüber dem Magnetträger 30 lediglich axial verschiebbar ausgeführt und dreht mit dem Magnetträger 30 mit. Die Welle 8 bzw. 8a wird vom Drehmotor 27 somit in Drehrichtung, und vom Linearantrieb 1 in axialer Richtung bewegt. Der Drehmotor 27 umfasst ebenfalls einen Sensor 31 zur Erfassung der Winkelposition bzw. zur Drehgeschwindigkeitsmessung. Der Sensor 31 ist über einen Sensorträger 32 mit dem Gehäuse 28 des Drehmotors 27 verbunden und tastet eine mit dem Magnetträger 30 verbundene Drehgeberscheibe 34 ab, die mit dem Magnetträger 30 mit rotiert. In leichter Abwandlung zur Fig. 7 weist der Linearantrieb 1 auf der rechten Seite einen radial einstellbaren oder sich selbst ausrichtenden Flansch 26 für eine zusätzliche Abstützung der Welle auf. Der gezeigte Linearantrieb umfasst ferner einen Kühlkörper 29 analog zu den in den Fig. 4 bis 6 gezeigten Ausführungsbeispielen. Die Welle 8 bzw. 8a des Dreh-Hub-Motors 33 weist vorzugsweise eine nicht dargestellte durchgehende Bohrung gemäß der in Fig. 7 gezeigten Bohrung 36 auf, so dass ein Vakuumanschluss zur einfachen Aufnahme von Werkstücken durch die Welle 8 bzw. 8a geführt werden kann. Auf einem werkstückseitigen Ende der Welle ist dazu eine Ansaugvorrichtung vorgesehen. Ferner weist der Dreh-Hub-Motor 33 vorzugsweise eine Parkposition auf. In dieser Parkposition befindet sich die Welle 8 bzw. 8a in einer zurückgezogenen Stellung und wir dort beispielsweise durch einen Magneten in Position gehalten.

Während die Welle jedes der gezeigten Ausführungsbeispiele zu beiden Seiten aus dem jeweiligen Gehäuse ragt, ist es mit Hilfe geteilter Wellen auch möglich, dass die Welle an lediglich einem Ende aus dem Gehäuse heraussteht. Entsprechende Ausführungen sind dem Fachmann geläufig.

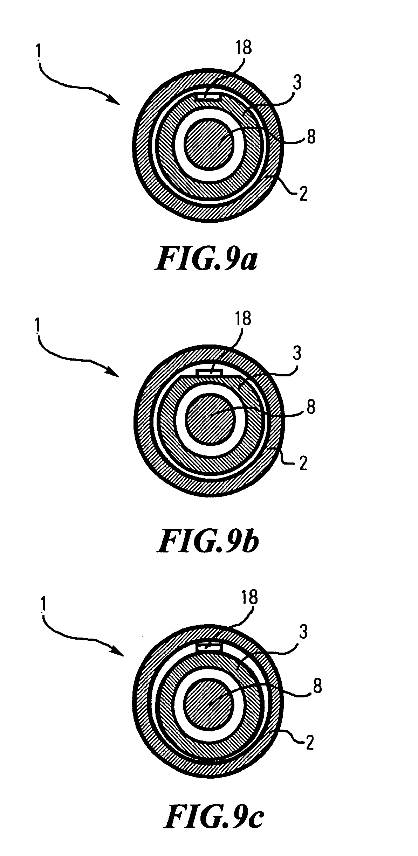

Die Figuren 9a, 9b und 9c zeigen jeweils einen schematischen Querschnitt durch einen Linearantrieb 1. Alle drei Figuren zeigen Alternativen zu den in den Figuren 5 und 6 gezeigten hufeisenförmig gewickelten Spulen des Wicklungssystems 2, wobei die Figuren 9b und 9c erfindungsgemäße Alternativen zeigen. Die in den Figuren 5 und 6 gezeigten hufeisenförmig gewickelten Spulen weisen eine Ausbuchtung für das Taktlineal 18 auf, wohingegen der erforderliche Platz für das Taktlineal 18 gemäß den in den Figuren 9a und 9b durch eine Einbuchtung des Magnetsystems 3 geschaffen wird. Die Einbuchtung kann, wie in Fig. 9a gezeigt, in einer Nut des Magnetsystems 3 oder einer Abflachung des Magnetsystems 3 gemäß Fig. 9b bestehen. In beiden Fällen ist das Wicklungssystem 2 hohlzylindrisch ausgeführt und muss keine Ausbuchtung für das Taktlineal aufweisen. Fig. 9c zeigt eine weitere Möglichkeit, den erforderlichen Platz für das Taktlineal 18 zu schaffen. Hier sind sowohl Wicklungssystem 2 als auch Magnetsystem 3 hohlzylindrisch ohne Ausbuchtung bzw. Einbuchtung ausgeführt. Der erforderliche Platz für das Taktlineal 18 ergibt sich durch eine leicht exzentrische Anordnung von Magnetsystem 3 und Wicklungssystem 2 zueinander. Im unteren Bereich liegen Magnetsystem 3 und Wicklungssystem 2 nah beieinander, so dass der dazwischen befindliche Luftspalt dort gering ist. Im oberen Bereich besteht zwischen Magnetsystem 3 und Wicklungssystem 2 aufgrund der leicht exzentrischen Anordnung ein größerer Abstand, wodurch der erforderliche Platz für das am Außenumfang des Magnetsystems 3 befestigte Taktlineal 18 geschaffen wird. Die Figuren 9a bis 9c zeigen lediglich den schematischen Aufbau des Linearmotors 1 im Querschnitt. Die in den Figuren 9a bis 9c gezeigten Alternativen zu den hufeisenförmig gewickelten Spulen des Wicklungssystems 2 lassen sich beispielsweise in den Linearmotoren der Fig. 4 bis 8 implementieren.

## Patentansprüche

1. Elektrischer Linearantrieb (1), mit einem Wicklungssystem (2) mit mehreren gewickelten Spulen (37), die koaxial zueinander und in axialer Richtung aufeinanderfolgend angeordnet sind, und einem in axialer Richtung relativ zum Wicklungssystem (2) beweglichen Magnetsystem (3) mit mehreren axial aufeinanderfolgenden Permanentmagneten (4, 5), wobei die Spulen (37) des Wicklungssystems (2) und die Permanentmagnete (4, 5) des Magnetsystems (3) zwischen sich einen Luftspalt (9) definieren, und wobei zur Erfassung der Relativbewegung von Wicklungssystem (2) und Magnetsystem (3) bzw. zur Erfassung der relativen Position dieser beiden Systeme ein Sensor (10) vorgesehen ist, durch welchen ein auf dem Außenumfang des Magnetsystems (3) aufgebrachtes Taktlineal (18) abtastbar ist, und wobei das Magnetsystem (3) radial im Innern des Wicklungssystems (2) angeordnet ist, und sich das Taktlineal (18) in Umfangsrichtung nur auf einem Teil des Umfangs des Magnetsystems (3) erstreckt, **dadurch gekennzeichnet, dass** die Spulen (37) des Wicklungssystems (2) eine radiale Ausbuchtung für das Taktlineal (18) aufweisen.

2. Elektrischer Linearantrieb (1) nach Anspruch 1, **dadurch gekennzeichnet, dass** der die innere Begrenzung des Luftspalts (9) bildende Außenumfang des Magnetsystems (3) zylindrisch ist, und die Spulen (37) des Wicklungssystems (2) in Form eines geschlossenen Hufeisens mit einem kreisrunden Abschnitt (23) und einem trapezförmigen Abschnitt (24) gewickelt sind, wobei das Taktlineal (18) innerhalb des trapezförmigen Abschnitts (24) des Hufeisens liegt.

3. Elektrischer Linearantrieb (1), mit einem Wicklungssystem (2) mit mehreren gewickelten Spulen (37), die koaxial zueinander und in axialer Richtung aufeinanderfolgend angeordnet sind, und einem in axialer Richtung relativ zum Wicklungssystem (2) beweglichen Magnetsystem (3) mit mehreren axial aufeinanderfolgenden Permanentmagneten (4, 5), wobei die Spulen (37) des Wicklungssystems (2) und die Permanentmagnete (4, 5) des Magnetsystems (3) zwischen sich einen Luftspalt (9) definieren, und wobei zur Erfassung der Relativbewegung von Wicklungssystem (2) und Magnetsystem (3) bzw. zur Erfassung der relativen Position dieser beiden Systeme ein Sensor (10) vorgesehen ist, durch welchen ein auf dem Außenumfang des Magnetsystems (3) aufgebrachtes Taktlineal (18) abtastbar ist, und wobei das Magnetsystem (3) radial im Innern des Wicklungssystems (2) angeordnet ist, und sich das Taktlineal (18) in Umfangsrichtung nur auf einem Teil des Umfangs des Magnetsystems (3) erstreckt, **dadurch gekennzeichnet, dass** das Magnetsystem (3) exzentrisch zum Wicklungssystem (2) angeordnet ist.

4. Elektrischer Linearantrieb (1), mit einem Wicklungssystem (2) mit mehreren gewickelten Spulen (37), die koaxial zueinander und in axialer Richtung aufeinanderfolgend angeordnet sind, und einem in axialer Richtung relativ zum Wicklungssystem (2) beweglichen Magnetsystem (3) mit mehreren axial aufeinanderfolgenden Permanentmagneten (4, 5), wobei die Spulen (37) des Wicklungssystems (2) und die Permanentmagnete (4, 5) des Magnetsystems (3) zwischen sich einen Luftspalt (9) definieren, und wobei zur Erfassung der Relativbewegung von Wicklungssystem (2) und Magnetsystem (3) bzw. zur Erfassung der relativen Position dieser beiden Systeme ein Sensor (10) vorgesehen ist, durch welchen ein auf dem Außenumfang des Magnetsystems (3) aufgebrachtes Taktlineal (18) abtastbar ist, und wobei das Magnetsystem (3) radial im Innern des Wicklungssystems (2) angeordnet ist, und sich das Taktlineal (18) in Umfangsrichtung nur auf einem Teil des Umfangs des Magnetsystems (3) erstreckt, **dadurch gekennzeichnet, dass** das Magnetsystem eine radiale Einbuchtung in Form einer Abflachung für das Taktlineal aufweist.

5. Elektrischer Linearantrieb (1) nach einem der Ansprüche 1 bis 4, **dadurch gekennzeichnet, dass** der Sensor (10) ein optischer, kapazitiver oder induktiver Sensor ist.

6. Elektrischer Linearantrieb (1) nach einem der Ansprüche 1 bis 5, **dadurch gekennzeichnet, dass** der Sensor (10) im Wicklungssystem (2) am Luftspalt (9) angeordnet ist, wobei in axialer Richtung des Wicklungssystems (2) zu beiden Seiten des Sensors (10) jeweils zumindest eine Spule des Wicklungssystems (2) angeordnet ist.

7. Elektrischer Linearantrieb (1) nach einem der Ansprüche 1 bis 6, **dadurch gekennzeichnet, dass** ein zur Aufnahme des Sensors (10) in das Wicklungssystem (2) integrierter Sensorträger (11) eine axial verlaufende Nut (22) zur Führung des Taktlineals (18) aufweist, oder das Magnetsystem (3) durch einen oder mehrere Schiebezapfen (25) verdrehsicher in Relation zum Wicklungssystem (2) geführt ist.

8. Elektrischer Linearantrieb (1) nach einem der Ansprüche 1 bis 7, **dadurch gekennzeichnet, dass** das Magnetsystem (3) drehbar auf einer Welle (8) mittels Kugellager (14) oder Duplexlager gelagert ist.

9. Elektrischer Linearantrieb (1) nach einem der Ansprüche 1 bis 8, **dadurch gekennzeichnet, dass** der elektrische Linearantrieb (1) in Kombination mit einem Drehmotor (27) mit integrierter Linearführung vorgesehen ist.

10. Elektrischer Linearantrieb (1) nach einem der Ansprüche 1 bis 9, **dadurch gekennzeichnet, dass** an beiden axialen Enden des elektrischen Linearantriebs (1) jeweils zumindest eine Öffnung vorgesehen ist, die mit einem Staubfilter (35) versehen ist.

## Claims

1. An electric linear drive (1) comprising a winding system (2) including a plurality of wound coils (37) which are arranged to be coaxial to each other and successive in axial direction, and a magnet system (3) which is movable in axial direction relative to the winding system (2) and comprises a plurality of axially successive permanent magnets (4, 5), the coils (37) of the winding system (2) and the permanent magnets (4, 5) of the magnet system (3) defining an air gap (9) thereinbetween, and a sensor (10) being provided for detecting the relative movement of winding system (2) and magnet system (3) or for detecting the relative position of said two systems, said sensor being used for scanning a timing ruler (18) mounted on the outer circumference of the magnet system (3), and said magnet system (3) being radially arranged in the interior of the winding system (2), and the timing ruler (18) circumferentially extending only over a portion of the circumference of the magnet system (3), **characterized in that** the coils (37) of the winding system (2) have a radial bulge for the timing ruler (18).

2. The electric linear drive (1) according to claim 1, **characterized in that** the outer circumference of the magnet system (3) forming the inner boundary of the air gap (9) is cylindrical, and the coils (37) of the winding system (2) are wound in the form of a closed horseshoe with a circular section (23) and a trapezoidal section (24), the timing ruler (18) being located inside the trapezoidal section (24) of the horseshoe.

3. The electric linear drive (1) comprising a winding system (2) including a plurality of wound coils (37) which are arranged to be coaxial to each other and successive in axial direction, and a magnet system (3) which is movable in axial direction relative to the winding system (2) and comprises a plurality of axially successive permanent magnets (4, 5), the coils (37) of the winding system (2) and the permanent magnets (4, 5) of the magnet system (3) defining an air gap (9) thereinbetween, and a sensor (10) being provided for detecting the relative movement of winding system (2) and magnet system (3) or for detecting the relative position of said two systems, said sensor being used for scanning a timing ruler (18) mounted on the outer circumference of the magnet system (3), and said magnet system (3) being radially arranged in the interior of the winding system (2), and the timing ruler (18) circumferentially extending only over a portion of the circumference of the magnet system (3), **characterized in that** the magnet system (3) is eccentrically arranged relative to the winding system (2).

4. The electric linear drive (1) comprising a winding system (2) including a plurality of wound coils (37) which are arranged to be coaxial to each other and successive in axial direction, and a magnet system (3) which is movable in axial direction relative to the winding system (2) and comprises a plurality of axially successive permanent magnets (4, 5), the coils (37) of the winding system (2) and the permanent magnets (4, 5) of the magnet system (3) defining an air gap (9) thereinbetween, and a sensor (10) being provided for detecting the relative movement of winding system (2) and magnet system (3) or for detecting the relative position of said two systems, said sensor being used for scanning a timing ruler (18) mounted on the outer circumference of the magnet system (3), and said magnet system (3) being radially arranged in the interior of the winding system (2), and the timing ruler (18) circumferentially extending only over a portion of the circumference of the magnet system (3), **characterized in that** the magnet system comprises a radial indentation in the form of a flat portion for the timing ruler.

5. The electric linear drive (1) according to any one of claims 1 to 4, **characterized in that** the sensor (10) is an optical, capacitive or inductive sensor.

6. The electric linear drive (1) according to any one of claims 1 to 5, **characterized in that** the sensor (10) is arranged in the winding system (2) on the air gap (2), wherein at least one coil of the winding system (2) is respectively arranged in axial direction of the winding system (2) at both sides of the sensor (10).

7. The electric linear drive (1) according to any one of claims 1 to 6, **characterized in that** a sensor carrier (11) integrated into the winding system (2) for accommodating the sensor (10) comprises an axially extending groove (22) for guiding the timing ruler (18), or the magnet system (3) is guided by one or a plurality of sliding pins (25) to be non-rotatable in relation to the winding system (2).

8. The electric linear drive (1) according to any one of claims 1 to 8, **characterized in that** the magnet system (3) is rotatably supported on a shaft (8) by means of ball bearings (14) or duplex bearings.

9. The electric linear drive (1) according to any one of claims 1 to 8, **characterized in that** the electric linear drive (1) is provided in combination with a rotary motor (27) with integrated linear guidance.

10. The electric linear drive (1) according to any one of claims 1 to 9, **characterized in that** at least one opening equipped with a dust filter (35) is provided on both axial ends of the electric linear drive (1).

## Revendications

1. Entraînement linéaire électrique (1) avec un système d'enroulement (2) avec plusieurs bobines enroulées (37) qui sont disposées coaxialement et à la suite les unes des autres dans le sens axial, et un système d'aimants (3), mobile dans le sens axial par rapport au système d'enroulement (2), avec plusieurs aimants permanents (4, 5) à la suite les uns des autres axialement, étant précisé que les bobines (37) du système d'enroulement (2) et les aimants permanents (4, 5) du système d'aimants (3) définissent entre eux un entrefer (9), et que pour détecter le déplacement relatif du système d'enroulement (2) et du système d'aimants (3) ou pour détecter la position relative de ces deux systèmes, il est prévu un capteur (10) grâce auquel une règle de cycle (18) appliquée sur la circonférence extérieure du système d'aimants (3) est apte à être balayée, et que le système d'aimants (3) est disposé radialement à l'intérieur du système d'enroulement (2) et que la règle de cycle (18) s'étend sur une partie seulement de la circonférence du système d'aimants (3), dans le sens circonférentiel, **caractérisé en ce que** les bobines (37) du système d'enroulement (2) présentent une partie bombée radialement pour la règle de cycle (18).

2. Entraînement linéaire électrique (1) selon la revendication 1, **caractérisé en ce que** la circonférence extérieure du système d'aimants (3) qui forme la délimitation intérieure de l'entrefer (9) est cylindrique, et les bobines (37) du système d'enroulement (2) sont enroulées en forme de fer à cheval fermé, avec une partie ronde (23) et une partie trapézoïdale (24), la règle de cycle (18) étant située à l'intérieur de la partie trapézoïdale (24) du fer à cheval.

3. Entraînement linéaire électrique (1) avec un système d'enroulement (2) avec plusieurs bobines enroulées (37) qui sont disposées coaxialement et à la suite les unes des autres dans le sens axial, et un système d'aimants (3), mobile dans le sens axial par rapport au système d'enroulement (2), avec plusieurs aimants permanents (4, 5) à la suite les uns des autres axialement, étant précisé que les bobines (37) du système d'enroulement (2) et les aimants permanents (4, 5) du système d'aimants (3) définissent entre eux un entrefer (9), et que pour détecter le déplacement relatif du système d'enroulement (2) et du système d'aimants (3) ou pour détecter la position relative de ces deux systèmes, il est prévu un capteur (10) grâce auquel une règle de cycle (18) appliquée sur la circonférence extérieure du système d'aimants (3) est apte à être balayée, et que le système d'aimants (3) est disposé radialement à l'intérieur du système d'enroulement (2) et que la règle de cycle (18) s'étend sur une partie seulement de la circonférence du système d'aimants (3), dans le sens circonférentiel, **caractérisé en ce que** le système d'aimants (3) est disposé de manière excentrée par rapport au système d'enroulement (2).

4. Entraînement linéaire électrique (1) avec un système d'enroulement (2) avec plusieurs bobines enroulées (37) qui sont disposées coaxialement et à la suite les unes des autres dans le sens axial, et un système d'aimants (3), mobile dans le sens axial par rapport au système d'enroulement (2), avec plusieurs aimants permanents (4, 5) à la suite les uns des autres axialement, étant précisé que les bobines (37) du système d'enroulement (2) et les aimants permanents (4, 5) du système d'aimants (3) définissent entre eux un entrefer (9), et que pour détecter le déplacement relatif du système d'enroulement (2) et du système d'aimants (3) ou pour détecter la position relative de ces deux systèmes, il est prévu un capteur (10) grâce auquel une règle de cycle (18) appliquée sur la circonférence extérieure du système d'aimants (3) est apte à être balayée, et que le système d'aimants (3) est disposé radialement à l'intérieur du système d'enroulement (2) et que la règle de cycle (18) s'étend sur une partie seulement de la circonférence du système d'aimants (3), dans le sens circonférentiel, **caractérisé en ce que** le système d'aimants présente un creux radial en forme de partie aplatie pour la règle de cycle.

5. Entraînement linéaire électrique (1) selon l'une des revendications 1 à 4, **caractérisé en ce que** le capteur (10) est constitué par un capteur optique, capacitif ou inductif.

6. Entraînement linéaire électrique (1) selon l'une des revendications 1 à 5, **caractérisé en ce que** le capteur (10) est disposé dans le système d'enroulement (2) au niveau de l'entrefer (9), étant précisé qu'au moins une bobine du système d'enroulement (2) est disposée, dans le sens axial de celui-ci, de chaque côté du capteur (10.

7. Entraînement linéaire électrique (1) selon l'une des revendications 1 à 6, **caractérisé en ce qu'**un support de capteur (11) intégré dans le système d'enroulement (2) pour recevoir le capteur (10) présente une rainure axiale (22) pour guider la règle de cycle (18), ou le système d'aimants (3) est guidé, fixe en rotation par rapport au système d'enroulement (2), par une ou plusieurs tiges de coulissement (25).

8. Entraînement linéaire électrique (1) selon l'une des revendications 1 à 7, **caractérisé en ce que** le système d'aimants (3) est monté en rotation sur un axe (8) à l'aide d'un roulement à billes (14) ou d'un palier duplex.

9. Entraînement linéaire électrique (1) selon l'une des revendications 1 à 8, **caractérisé en ce que** l'entraînement linéaire électrique (1) est prévu en combinaison avec un moteur couple (27) à guidage linéaire intégré.

10. Entraînement linéaire électrique (1) selon l'une des revendications 1 à 9, **caractérisé en ce qu'**il est prévu à chaque extrémité axiale de l'entraînement linéaire électrique (1) au moins une ouverture qui est pourvue d'un filtre à poussière (35).
